# EUROPÄISCHE PATENTSCHRIFT

(11) **EP 3 653 547 B1**
(45) Veröffentlichungstag und Bekanntmachung des Hinweises auf die Patenterteilung: **31.03.2021**
(21) Anmeldenummer: 19208308.7
(22) Anmeldetag: 11.11.2019
(51) Int. Cl.: B65G 47/51

(54) **VERFAHREN ZUM TRANSPORTIEREN VON PRODUKTIONSERZEUGNISSEN**
METHOD FOR TRANSPORTING PRODUCTION PIECES
PROCÉDÉ DE TRANSPORT DE PRODUITS

(30) Priorität: 13.11.2018 DE 102018128348
(43) Veröffentlichungstag der Anmeldung: 20.05.2020
(73) Patentinhaber: Saeta GmbH & Co. KG, 22880 Wedel (DE)
(72) Erfinder: Thomas. HAAR, 25469 Halstenbek (DE)
(74) Vertreter: Hauck Patentanwaltspartnerschaft mbB

(56) Entgegenhaltungen:
- WO-A1-2015/179722
- DE-A1- 10 300 642
- DE-U- 6 903 216
- DE-U1- 29 804 640

## Beschreibung

Die Erfindung betrifft ein Verfahren zum Transportieren von Produktionserzeugnissen von einer ersten Produktionsmaschine zu einer zweiten Produktionsmaschine mittels einer Fördereinrichtung, wobei die erste und zweite Produktionsmaschine taktweise betrieben werden, wobei die in der ersten Produktionsmaschine erzeugten Produktionserzeugnisse der Fördereinrichtung zugeführt werden, wobei die Produktionserzeugnisse von der Fördereinrichtung mitgenommen und entlang der Förderstrecke der Fördereinrichtung auf die Geschwindigkeit der Fördereinrichtung gezwungen werden und die Produktionserzeugnisse mittels der Fördereinrichtung taktweise und lagerichtig (zum Abgreifen) der zweiten Produktionsmaschine zugeführt werden.

Bei der ersten und zweiten Produktionsmaschine kann es sich beispielsweise um erste und zweite Tiefziehpressen handeln. Bei den Produktionserzeugnissen kann es sich entsprechend um Napfzüge handeln. Beispielsweise in der Herstellung von zweiteiligen Konservendosen, bestehend aus einem tiefgezogenen Unterteil und einem Deckel, werden in einer ersten Tiefziehpresse napfförmige Vorzüge erzeugt, die dann zu einer zweiten Tiefziehpresse transportiert werden, in der ein weiterer Tiefziehprozess zum Herstellen der finalen Napfform erfolgt. Manchmal erfolgt in der zweiten Tiefziehpresse auch nur noch ein Schneidvorgang. Die aus der ersten Tiefziehpresse kommenden Napfzüge weisen oftmals einen um ihre später mit dem Deckel zu verschließende Öffnung umlaufenden Flansch auf. Der Flansch dient zur Verbindung mit dem Deckel, beispielsweise in einem Bördelverfahren.

Es ist bekannt, die Napfzüge (auch Cups genannt) mittels sogenannter Jets von der ersten Tiefziehpresse zu der zweiten Tiefziehpresse zu transportieren. Dabei ist eine Mehrzahl von entlang der Förderstrecke der Napfzüge angeordneten Ausblasdüsen vorgesehen, die jeweils einen Luftstrom ausblasen, der die Napfzüge entlang der Förderstrecke treibt. Häufig wird vor der Zuführung der Napfzüge zur zweiten Tiefziehpresse ein Stau aus Napfzügen erzeugt. Dies dient der einfacheren Synchronisation der Tiefziehpressen und der Kompensation von etwaigen Leerhüben (Hübe der Tiefziehpresse beim Tafelwechsel, die keine Cups erzeugen). Jets haben beispielsweise gegenüber Gurtförderern den Vorteil, dass sie bei einem Stau keinen Abrieb an den aufliegenden Flanschen der Napfzüge erzeugen. Allerdings müssen die Jets mit aufwendigen Napfzugführungen ausgerüstet werden, um ein Wegfliegen der Napfzüge zu verhindern. Dies bedeutet nicht nur Aufwand, sondern auch das Erfordernis einer exakten Einstellung auf die jeweilige Napfzugabmessung.

Da die Napfzüge in der Regel aus der ersten Tiefziehpresse ausgeblasen werden, verfügen sie über eine nicht unerhebliche Geschwindigkeit, die beim Auftreffen auf das Stauende zu Verformungen führen kann. Daher werden teilweise Napfzugbremsen eingesetzt, beispielsweise langsam drehende Räder mit einer weichen oder bürstenartigen Oberfläche, die die Napfzüge abbremsen. Anschließend beschleunigen die Napfzüge aber wieder bis sie auf das Stauende auftreffen. Dieses Auftreffen auf das Stauende sowie die unvermeidliche Relativbewegung der Napfzüge zueinander während des taktweisen Vorrückens im Stau können Beschädigungen an der in der Regel bereits lackierten Oberfläche der Napfzüge verursachen, insbesondere weil die scharfe Flanschkante, die ja auch die Schnittkante der in der ersten Tiefziehpresse geschnittenen Platine ist, unvermeidlich an der Außenwand des jeweiligen Staunachbarn reibt. Eine zufriedenstellende Lösung für dieses Problem existiert bislang nicht.

Zudem ist es erforderlich, die Napfzüge für die Übergabe in die zweite Tiefziehpresse aus dem Stau heraus zu vereinzeln, damit sie zur rechten Zeit am richtigen Ort sind, um von dem Transfersystem der zweiten Tiefziehpresse, in der Regel ein Greifervorschub oder ähnliches, sicher erfasst zu werden. Diese Vereinzelungsstationen bestehen aus Schnecken oder gesteuerten Pins. Diese Teile müssen exakt auf die jeweiligen Napfzugabmessungen eingestellt oder sogar individuell angefertigt werden. Auch dies stellt einen unerwünscht hohen Aufwand dar.

Eine vollständige Synchronisation zwischen der ersten und zweiten Tiefziehpresse ist schwierig und führt bei nicht vollständiger Synchronisierung zu einer Schwebung (Jitter). Darüber hinaus kann es aus unterschiedlichen Gründen, beispielsweise bei einer Fehlfunktion, zu einem plötzlichen, selbsttätigen Stopp der zweiten Tiefziehpresse kommen. Die aus der ersten Tiefziehpresse kommenden Napfzüge werden wie erläutert taktweise der zweiten Tiefziehpresse zugeführt. Bei einem plötzlichen Stopp der zweiten Tiefziehpresse tritt daher das Problem auf, dass ein von der ersten Tiefziehpresse im Rahmen des taktweisen Vorschubs zuletzt noch ausgebrachter Napfzug nicht mehr von der dann ebenfalls gestoppten Fördereinrichtung aufgenommen werden kann. Dies führt zu einem Napfzugstau, wobei der überzählige Napfzug gegebenenfalls manuell vor einem Wiederanfahren der Produktion aus der Produktionsstrecke entfernt werden muss.

Das Dokument DE 298 04 640 U1 offenbart ein Verfahren zum Transportieren von Produktionserzeugnissen von einer ersten Produktionsmaschine zu einer zweiten Produktionsmaschine mittels einer Fördereinrichtung, wobei die erste und zweite Produktionsmaschine taktweise betrieben werden, wobei die in der ersten Produktionsmaschine erzeugten Produktionserzeugnisse der Fördereinrichtung zugeführt werden, wobei die Produktionserzeugnisse von der Fördereinrichtung mitgenommen und entlang der Förderstrecke der Fördereinrichtung auf die Geschwindigkeit der Fördereinrichtung gezwungen werden und die Produktionserzeugnisse mittels der Fördereinrichtung taktweise der zweiten Produktionsmaschine zugeführt werden, wobei die Fördereinrichtung die Produktionserzeugnisse derart beabstandet mitnimmt, dass zwischen benachbarten Produktionserzeugnissen ein Freiraum besteht, wobei bei einem Stopp der zweiten Produktionsmaschine auch die erste Produktionsmaschine gestoppt wird.

Ausgehend von dem Stand der Technik liegt der Erfindung die Aufgabe zugrunde, ein Verfahren der eingangs genannten Art bereitzustellen, mit denen Napfzüge jederzeit zuverlässig zwischen einer ersten und einer zweiten Produktionsmaschine transportiert werden können.

Die Erfindung löst die Aufgabe durch die Merkmale des Anspruchs 1. Vorteilhafte Ausgestaltungen finden sich in den abhängigen Ansprüchen, der Beschreibung und den Figuren.

Die Erfindung löst die Aufgabe für ein Verfahren der eingangs genannten Art dadurch, dass die Fördereinrichtung die Produktionserzeugnisse derart beabstandet mitnimmt, dass zwischen benachbarten Produktionserzeugnissen ein Freiraum zur Aufnahme mindestens eines weiteren Produktionserzeugnisses besteht, und dass bei einem (plötzlichen) Stopp der zweiten Produktionsmaschine auch die erste Produktionsmaschine gestoppt wird und die Fördereinrichtung derart angesteuert wird, dass ein von der ersten Produktionsmaschine vor dem Stopp zuletzt ausgegebenes Produktionserzeugnis in dem der ersten Produktionsmaschine nächsten Freiraum von der Fördereinrichtung aufgenommen wird und die Fördereinrichtung anschließend ebenfalls gestoppt wird.

Die erste Produktionsmaschine kann eine erste Tiefziehpresse und die zweite Produktionsmaschine eine zweite Tiefziehpresse sein. Die Produktionserzeugnisse können entsprechend Napfzüge sein. Die erste Produktionsmaschine, beispielsweise die erste Tiefziehpresse, und die zweite Produktionsmaschine, beispielsweise die zweite Tiefziehpresse, werden erfindungsgemäß insbesondere synchronisiert miteinander betrieben. Sie sind dabei insbesondere zumindest hinsichtlich ihrer Geschwindigkeit synchronisiert, vorzugsweise hinsichtlich ihrer Geschwindigkeit und Phase synchronisiert. Bei der Fördereinrichtung kann es sich um ein Förderband handeln. Wie eingangs erläutert, kann in der ersten Tiefziehpresse eine Platine zugeschnitten und daraus in einem Tiefziehprozess ein Napfzug, insbesondere ein Napfvorzug, erzeugt werden. Die der ersten Tiefziehpresse nachfolgende zweite Tiefziehpresse kann dann einen weiteren Tiefziehvorgang an den Napfzügen ausführen oder aber nur einen Schneidvorgang. Für den Transport der Napfzüge von der ersten Tiefziehpresse zu der zweiten Tiefziehpresse kann mindestens ein Förderband, insbesondere Endlosförderband, vorgesehen sein. Das Förderband gibt dann die Geschwindigkeit der Napfzüge entlang der Förderstrecke, insbesondere entlang der gesamten Förderstrecke, vor. Die aus der ersten Tiefziehpresse mit in der Regel höherer Geschwindigkeit als das Förderband auf das Förderband gelangenden, beispielsweise ausgeblasenen, Napfzüge werden durch das Förderband zunächst auf die Geschwindigkeit des Förderbandes abgebremst und dann mit der Geschwindigkeit des Förderbandes entlang der Förderstrecke gefördert. Wie bereits erläutert, können die Napfzüge insbesondere einen um ihre später mit einem Deckel zu verschließende Öffnung umlaufenden Flansch besitzen. Die Erfindung kann ohne Funktionseinschränkung in einfacher Weise auch unterschiedliche Napfabmessungen und -formen transportieren.

Erfindungsgemäß werden die Produktionserzeugnisse von der Fördereinrichtung derart gefördert, dass zumindest am Beginn ihres Förderweges auf der Fördereinrichtung zwischen benachbarten Produktionserzeugnissen ein Freiraum zur Aufnahme mindestens eines weiteren Produktionserzeugnisses besteht. Diese zwischen benachbarten Produktionserzeugnissen geschaffenen Freiräume bleiben im Regelbetrieb, wenn erste und zweite Produktionsmaschine ordnungsgemäß laufen, frei. Kommt es nun zu einem plötzlichen, selbsttätigen Stopp der zweiten Produktionsmaschine, und damit der Fördereinrichtung sowie der ersten Produktionsmaschine, kann ein von der ersten Produktionsmaschine vor dem Stopp zuletzt noch ausgebrachtes Produktionserzeugnis von diesem Freiraum aufgenommen werden und entsprechend von der ersten Produktionsmaschine noch der Fördereinrichtung übergeben werden ohne dass es zu einer Fehlfunktion kommt. Bei einem erneuten Anfahren der zweiten Produktionsmaschine nach dem Stopp kann das betreffende Produktionserzeugnis dann von dieser verarbeitet werden ohne dass ein Entfernen aus dem Produktionsweg erforderlich wäre. Erfindungsgemäß kann somit auch bei einem plötzlichen Stopp der zweiten Produktionsmaschine eine Verarbeitung sämtlicher Produktionserzeugnisse erfolgen ohne dass es zu einer Fehlfunktion kommt oder ein manueller Eingriff in den Produktionsbetrieb erforderlich ist. Durch die Erfindung können die Produktionserzeugnisse folglich jederzeit und auch bei einem plötzlichen Stopp der zweiten Produktionsmaschine zuverlässig zwischen der ersten und der zweiten Produktionsmaschine transportiert werden.

Gemäß einer Ausgestaltung kann vorgesehen sein, dass bei einem Wiederanfahren der zweiten Produktionsmaschine nach einem (plötzlichen) Stopp auch die Fördereinrichtung wieder angefahren wird, wobei die Fördereinrichtung derart angesteuert wird, dass bei Erreichen der zweiten Produktionsmaschine durch das in dem Freiraum aufgenommene Produktionserzeugnis dieses Produktionserzeugnis der zweiten Produktionsmaschine entsprechend dem Takt der zweiten Produktionsmaschine zugeführt wird. Die Geschwindigkeit und/oder der Förderweg der Fördereinrichtung wird dann bei Erreichen der zweiten Produktionsmaschine durch den in dem Freiraum aufgenommenen Produktionserzeugnis geändert, so dass auch dieses Produktionserzeugnis der zweiten Produktionsmaschine im Rahmen ihres normalen Takts zur Verarbeitung zugeführt wird. Die durch das in dem Freiraum aufgenommene Produktionserzeugnis entstandene Anomalie auf der Fördereinrichtung wird entsprechend im normalen Betrieb der zweiten Produktionsmaschine abgebaut.

Um zu verhindern, dass dabei eine erneute Anomalie am Beginn der Förderstrecke durch von der ersten Produktionsmaschine ausgegebene Produktionserzeugnisse entsteht, kann nach einer weiteren Ausgestaltung vorgesehen sein, dass die erste Produktionsmaschine erst wieder angefahren wird, wenn das in dem Freiraum aufgenommene Produktionserzeugnis von der Fördereinrichtung der zweiten Produktionsmaschine zugeführt wurde.

Es ist erfindungsgemäß auch möglich, dass sich benachbarte Produktionserzeugnisse entlang der gesamten Förderstrecke der Fördereinrichtung nicht berühren, beispielsweise weil über die gesamte Förderstrecke jeweils der erfindungsgemäße Freiraum zwischen benachbarten Produktionserzeugnissen besteht. Eine Beschädigung der Lackierung der Produktionserzeugnisse wird so sicher ausgeschlossen.

Die Fördereinrichtung kann gemäß einer besonders praxisgemäßen Ausgestaltung während eines Arbeitstakts der ersten und zweiten Produktionsmaschine im Regelbetrieb, also bei ordnungsgemäß laufender erster und zweiter Produktionsmaschine, jeweils mindestens zwei Förderschritte ausführen. Dadurch können die Aufnahme eines Produktionserzeugnisses in einem Freiraum und die spätere Übergabe an die zweite Produktionsmaschine in besonders einfacher Weise erfolgen, indem die Fördereinrichtung hierzu jeweils nur einen der zwei Förderschritte ausführt.

Es ist aber auch möglich, dass die Fördereinrichtung während eines Arbeitstakts der ersten und zweiten Produktionsmaschine im Regelbetrieb, also bei ordnungsgemäß laufender erster und zweiter Produktionsmaschine, jeweils (genau) einen Förderschritt ausführt. Dieser Förderschritt ist dann groß genug, um die erfindungsgemäßen Freiräume zu erzeugen. Für die Aufnahme eines Produktionserzeugnisses in einem Freiraum und die spätere Übergabe an die zweite Produktionsmaschine kann die Fördereinrichtung dann jeweils einen entsprechend verkürzten Förderschritt ausführen.

Die Produktionserzeugnisse können durch die Fördereinrichtung einer Übergabestation zur Übergabe an die zweite Produktionsmaschine zugeführt werden. An die Fördereinrichtung kann sich auch eine Transfereinrichtung anschließen, die die Produktionserzeugnisse zur Übergabe in die zweite Produktionsmaschine, beispielsweise zur Übergabestation, befördert.

Die Fördereinrichtung, beispielsweise das Förderband, kann durch einen oder mehrere Servoantriebe angetrieben sein. Servoantriebe sind in der Geschwindigkeit besonders einfach und präzise steuerbar. Die Vorrichtung kann weiterhin mehrkanalig ausgebildet sein. Es sind dann mehrere parallel angeordnete erfindungsgemäß ausgestaltete Fördereinrichtungen vorgesehen, die jeweils individuell in der erfindungsgemäßen Weise gesteuert werden können. Es versteht sich, dass sämtliche der vorstehend und nachfolgend beschriebenen Ausgestaltungen der Erfindung bei einer mehrkanaligen Vorrichtung, die also mehrere parallel verlaufende Fördereinrichtungen besitzt, für jede der Fördereinrichtungen vorgesehen sein können.

Gemäß einer weiteren Ausgestaltung kann an zumindest einem Ort entlang der Förderstrecke der Fördereinrichtung jeweils die Position der Produktionserzeugnisse detektiert werden. Es ist dann weiter möglich, dass die Geschwindigkeit der Fördereinrichtung abhängig von der jeweils detektierten Position der Produktionserzeugnisse jeweils so angepasst wird, dass die Produktionserzeugnisse der zweiten Produktionsmaschine synchron mit dem Arbeitstakt der zweiten Produktionsmaschine zugeführt werden. Die Fördereinrichtung kann dabei mit variabler Geschwindigkeit angetrieben werden, wodurch auch die Produktionserzeugnisse mit entsprechend variabler Geschwindigkeit entlang der Förderstrecke bewegt werden können. Durch diese variable Geschwindigkeitseinstellung können die Produktionserzeugnisse weitgehend unabhängig von dem Arbeitstakt der ersten Produktionsmaschine und somit ihrem Austrittszeitpunkt aus der ersten Produktionsmaschine der zweiten Produktionsmaschine übergeben werden. Die Position der Produktionserzeugnisse auf der Fördereinrichtung ist entlang der Förderstrecke, insbesondere entlang der gesamten Förderstrecke, fix. Zur Synchronisation der Fördereinrichtung, insbesondere der Zuführung der Produktionserzeugnisse, zu dem Arbeitstakt der zweiten Produktionsmaschine ist bei dieser Ausgestaltung mindestens ein Detektor, beispielsweise ein optischer Detektor, vorgesehen. Mit dem Detektor wird die Position der Produktionserzeugnisse jeweils detektiert, insbesondere wann ein Produktionserzeugnis eine bestimmte Position entlang der Förderstrecke erreicht und/oder verlässt. Auf dieser Grundlage sind für die Steuerung der Fördereinrichtung die Abstände zwischen benachbarten Produktionserzeugnissen bekannt, die aus unterschiedlichen Gründen variieren können. Auf dieser Grundlage kann die Fördereinrichtung jeweils so angesteuert werden, dass die Produktionserzeugnisse der zweiten Produktionsmaschine zum richtigen Zeitpunkt, nämlich synchronisiert zu dem Arbeitstakt der zweiten Produktionsmaschine, zugeführt werden. Das Ausbilden eines Staus aus Produktionserzeugnissen vor der zweiten Produktionsmaschine ist daher nicht erforderlich. Vielmehr bringt die Fördereinrichtung Produktionserzeugnis für Produktionserzeugnis zeitgerecht, durch entsprechende synchrone Steuerung zur Bewegung der zweiten Produktionsmaschine, in die richtige Übergabeposition. Die Geschwindigkeit der Fördereinrichtung kann sich bei dieser Ausgestaltung häufig verändern. Die Fördereinrichtung kann stillstehen, sich gleichförmig bewegen oder (positiv oder negativ) beschleunigt werden. Die Bewegung der Fördereinrichtung kann dabei bestimmt sein durch den Arbeitstakt der zweiten Produktionsmaschine und die Position der Produktionserzeugnisse auf der Fördereinrichtung. Grundsätzlich ist es möglich, dass die Produktionserzeugnisse von der Fördereinrichtung zunächst einem Transfersystem zugeführt werden, von welchem sie in eine Übergabeposition zur zweiten Produktionsmaschine gebracht werden. Durch die vorgenannte Ausgestaltung wird in einfacher Weise ein Transport zur Bereitstellung für das Transfersystem der zweiten Produktionsmaschine ermöglicht ohne Berührung der Produktionserzeugnisse untereinander. Insbesondere können aufwendige Cupführungen und dergleichen entfallen.

Die Produktionserzeugnisse können durch mehrere Ansaugöffnungen der Fördereinrichtung auf die Fördereinrichtung gesaugt und dadurch auf die Geschwindigkeit der Fördereinrichtung gezwungen werden. Durch Anlegen eines geeigneten Unterdrucks werden die Produktionserzeugnisse in besonders einfacher Weise an die Geschwindigkeit der Fördereinrichtung angepasst und es wird sichergestellt, dass sich die Produktionserzeugnisse auf der Fördereinrichtung im Wesentlichen nicht relativ zu der Fördereinrichtung bewegen können. Sofern Produktionserzeugnisse aus einem magnetischen Material transportiert werden, ist es auch möglich, dass die Produktionserzeugnisse durch Magnetkraft auf die Fördereinrichtung gezogen und dadurch auf die Geschwindigkeit der Fördereinrichtung gezwungen werden. In diesem Fall können unterhalb der Fördereinrichtung entsprechende Magnete vorgesehen sein, die eine Magnetkraft auf die Produktionserzeugnisse ausüben. Auch auf diese Weise können die Produktionserzeugnisse an die Geschwindigkeit der Fördereinrichtung angepasst werden derart, dass sie sich relativ zu der Fördereinrichtung nicht bewegen. Bei den beiden vorgenannten Ausgestaltungen kann sich die Fördereinrichtung insbesondere unterhalb der Produktionserzeugnisse befinden, die somit auf der Fördereinrichtung transportiert werden.

Nach einer alternativen Ausgestaltung ist es auch möglich, dass die Produktionserzeugnisse durch die Fördereinrichtung auf eine Gleitoberfläche gedrückt werden und dadurch auf die Geschwindigkeit der Fördereinrichtung gezwungen werden. Die Fördereinrichtung befindet sich dann also oberhalb der Produktionserzeugnisse und drückt diese auf die Gleitoberfläche. Die Fördereinrichtung nimmt die Produktionserzeugnisse mittels Friktion mit. Insbesondere kann die Fördereinrichtung die Produktionserzeugnisse durch eine gummierte oder strukturierte Oberfläche gleitend auf der Gleitoberfläche entlang der Förderstrecke mitnehmen und so auf die Geschwindigkeit der Fördereinrichtung zwingen. Diese Ausgestaltung kann beispielsweise erforderlich sein, wenn es sich bei den Produktionserzeugnisse um Napfzüge in Form von nachgezogenen, konischen Dosen handelt. Diese haben oftmals einen sehr breiten Flansch, der zu einer ausgeprägten Ondulation neigt. Diese Ondulation kann den Aufbau eines Unterdrucks behindern, so dass beispielsweise ein Ansaugen der Napfzüge über Ansaugöffnungen nicht zuverlässig möglich ist. Die Fördereinrichtung bildet dann einen Oberriemen, der im Wesentlichen entlang der gesamten Förderstrecke Druck von oben auf die Napfzüge ausübt.

Nach einer weiteren Ausgestaltung können die Produktionserzeugnisse am Ende der Fördereinrichtung jeweils durch die Fördereinrichtung abgebremst werden und in einer Übergabeposition zur Übergabe in die zweite Produktionsmaschine angehalten werden. Die Übergabeposition kann sich noch auf der Förderstrecke der Fördereinrichtung befinden oder auf einem sich an die Förderstrecke der Fördereinrichtung in Förderrichtung der Produktionserzeugnisse anschließenden Abschnitt. Wie erläutert, ist es möglich, dass sich an diese Übergabeposition ein Transfersystem anschließt, welches die Produktionserzeugnisse dann in eine (weitere) Übergabeposition transportiert, aus der sie in die zweite Produktionsmaschine übergeben werden. Es ist jedoch auch möglich, dass die Produktionserzeugnisse beispielsweise durch eine Greifereinrichtung oder ähnliches direkt aus der (ersten) Übergabeposition aufgenommen und der zweiten Produktionsmaschine zugeführt werden.

Die Position der Produktionserzeugnisse kann jeweils an einem Ort der Förderstrecke der Fördereinrichtung detektiert werden, der von der Übergabeposition um mindestens den zum Abbremsen der Produktionserzeugnisse bis zum Stillstand erforderlichen Bremsweg beabstandet ist. Auf diese Weise wird sichergestellt, dass nach Detektion beispielsweise des vorderen Randes eines Produktionserzeugnisses durch den Detektor noch ausreichend Zeit besteht, um das detektierte Produktionserzeugnis bis zur Übergabeposition in den Stillstand abzubremsen. Die endgültige Position des Produktionserzeugnisses in der Übergabeposition kann über ein mit der Fördereinrichtung verbundenes Messsystem eingefahren werden, insbesondere eines NC-Messsystems. Dies erlaubt eine besonders einfache Feinjustierung der Übergabeposition.

Nach einer weiteren Ausgestaltung ist es möglich, dass die Position der Produktionserzeugnisse jeweils an einem ersten Ort der Förderstrecke der Fördereinrichtung und einem in Förderrichtung der Produktionserzeugnisse dem ersten Ort nachfolgenden zweiten Ort der Förderstrecke der Fördereinrichtung detektiert wird. Beispielsweise kann der in Förderrichtung der Produktionserzeugnisse erste Detektor einen Abstand zwischen zwei aufeinanderfolgenden Produktionserzeugnissen messen. Der in Förderrichtung nachfolgende zweite Detektor kann dann beispielsweise feststellen, wann der vorlaufende der beiden hinsichtlich ihres Abstandes detektierten Produktionserzeugnisse den Ort des zweiten Detektors erreicht und die die Fördereinrichtung kann entsprechend so gesteuert und abgebremst werden, dass dieses Produktionserzeugnis in der Übergabeposition angehalten wird. Aufgrund der Kenntnis des Abstandes zu dem nächsten Produktionserzeugnis kann die Fördereinrichtung nach der Übergabe des ersten Produktionserzeugnisses mit dem erforderlichen Maß beschleunigt werden, um das nachfolgende Produktionserzeugnis wieder rechtzeitig der Übergabeposition zuzuführen. Beispielsweise kann bei einem größeren Abstand zwischen benachbarten Produktionserzeugnissen eine größere Beschleunigung der Fördereinrichtung gewählt werden als bei einem kleineren Abstand zwischen benachbarten Produktionserzeugnissen. Gegebenenfalls ist es durch eine große Beschleunigung der Fördereinrichtung auch möglich, etwaige Leerhübe der ersten Produktionsmaschine auszugleichen.

Nach einer weiteren Ausgestaltung ist es möglich, dass am Beginn der Förderstrecke der Fördereinrichtung jeweils der Abstand zwischen aufeinanderfolgenden Produktionserzeugnissen detektiert wird und bei Überschreiten eines vorgegebenen Abstandes in einem sich an den Beginn der Förderstrecke anschließenden Eingangsabschnitt der Förderstrecke die Produktionserzeugnisse nicht auf die Geschwindigkeit der Fördereinrichtung gezwungen werden. Wie erläutert, gelangen die Produktionserzeugnisse in der Regel mit hoher Geschwindigkeit aus der ersten Produktionsmaschine zu der Fördereinrichtung, beispielsweise mittels einer Ausblaseinrichtung. Bei dieser Ausgestaltung können die Produktionserzeugnisse entlang des Eingangsabschnitts der Förderstrecke mit höherer Geschwindigkeit über die Fördereinrichtung gleiten als die Geschwindigkeit der Fördereinrichtung selbst. Nach Ende des Eingangsabschnitts werden sie durch die Fördereinrichtung abgebremst und auf die in der Regel geringere Geschwindigkeit der Fördereinrichtung gezwungen. Auch auf diese Weise können Leerhübe der ersten Produktionsmaschine oder anderweitig bedingte große Abstände zwischen benachbarten Produktionserzeugnissen ausgeglichen werden. Wird beispielsweise eine Unterdruckeinrichtung mit Ansaugöffnungen zum Ansaugen der Produktionserzeugnisse auf die Fördereinrichtung verwendet, können steuerbare Unterdruckkammern vorgesehen sein, die im Bereich des Eingangsabschnitts angeordnet sind. Die Steuereinrichtung kann die Unterdruckkammern dann gezielt deaktivieren oder aktivieren, so dass die von der ersten Produktionsmaschine kommenden Produktionserzeugnisse mehr oder weniger weit auf die Fördereinrichtung gleiten. Entsprechend ist dies auch möglich mit steuerbaren Magneten unterhalb der Fördereinrichtung im Bereich des Eingangsabschnitts. Auch ein oberhalb der Produktionserzeugnisse angeordneter Druckgurt als Fördereinrichtung kann in entsprechender Weise gesteuert werden.

Ein Ausführungsbeispiel der Erfindung wird nachfolgend anhand von Figuren näher erläutert. Es zeigen schematisch:
- Fig. 1: eine Vorrichtung zur Durchführung des erfindungsgemäßen Verfahrens in einer Schnittansicht in einem ersten Betriebszustand,
- Fig. 2: die Vorrichtung aus Figur 1 in einem zweiten Betriebszustand,
- Fig. 3: die Vorrichtung aus Figur 1 in einem dritten Betriebszustand, und
- Fig. 4: die Vorrichtung aus Figur 1 in einem vierten Betriebszustand.

Soweit nichts anderes angegeben ist, bezeichnen in den Figuren gleiche Bezugszeichen gleiche Gegenstände.

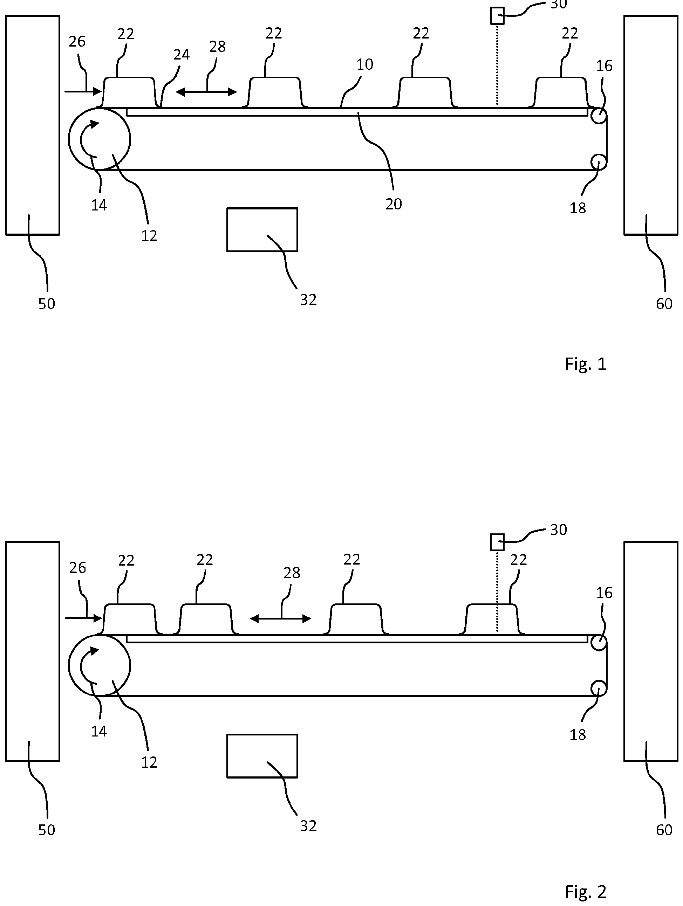

Die in den Figuren gezeigte Vorrichtung umfasst eine Fördereinrichtung in Form eines Förderbandes 10. Bei dem Förderband 10 handelt es sich um ein Endlosförderband, welches an einem Ende durch eine Antriebstrommel 12 angetrieben wird, wie durch den Pfeil 14 veranschaulicht. Am gegenüberliegenden Ende läuft das Förderband 10 über zwei Umlenkstäbe 16, 18, wodurch an diesem Ende besonders wenig Platz von der Vorrichtung beansprucht wird. Das Förderband 10 besitzt über seine gesamte Oberfläche verteilt eine Vielzahl von in Fig. 1 nicht näher dargestellten Ansaugöffnungen. Eine Unterdruckeinrichtung 20 erzeugt einen Unterdruck, der über die Ansaugöffnungen auf Napfzüge 22 als Produktionserzeugnisse wirkt, die auf dem Förderband 10 gefördert werden. Die Napfzüge 22 besitzen jeweils einen umlaufenden Flansch 24, mit dem sie auf dem Förderband 10 aufliegen.

In dem gezeigten Beispiel werden die Napfzüge 22 in einer sehr schematisch dargestellten ersten Tiefziehpresse 50 als erste Produktionsmaschine erzeugt, indem die erste Tiefziehpresse 50 zunächst Platinen aus einem Blech ausschneidet und anschließend einen Tiefziehvorgang ausführt. Mittels einer Ausblaseinrichtung, die nicht näher dargestellt ist, werden die Napfzüge 22 von der ersten Tiefziehpresse 50 mit höherer Geschwindigkeit als das Förderband 10 der Oberseite des Förderbandes 10 zugeführt, wie in Fig. 1 durch den Pfeil 26 veranschaulicht. Durch die Unterdruckeinrichtung 20 und die Ansaugöffnungen des Förderbandes 10 werden die Napfzüge 22 bei Erreichen des Förderbandes 10 abgebremst und auf die Geschwindigkeit des Förderbandes 10 gezwungen. Das Förderband 10 nimmt die Napfzüge 22 dabei derart beabstandet mit, dass zwischen benachbarten Napfzügen 22 ein Freiraum zur Aufnahme mindestens eines weiteren Napfzuges 22 besteht, wie in Figur 1 durch den Pfeil 28 veranschaulicht. Das Förderband 10 kann dabei während eines Arbeitstakts der ersten und zweiten Tiefziehpresse 50, 60 jeweils zwei Förderschritte ausführen.

Bei dem Bezugszeichen 30 ist ein in dem dargestellten Beispiel optischer Detektor dargestellt, der an einem vorgegebenen Ort der Förderstrecke entlang des Förderbandes 10 jeweils die Vorderkante eines Napfzuges 22 optisch detektiert. Eine Steuereinrichtung 32 erhält die Messdaten des Detektors 30 und steuert auf dieser Grundlage das Förderband 10 über die Antriebstrommel 12 so an, dass die Napfzüge 22 nacheinander und jeweils angepasst an den Arbeitstakt einer der ersten Tiefziehpresse 50 nachfolgenden zweiten Tiefziehpresse 60 als zweite Produktionsmaschine in einer Übergabeposition zum Stillstand gebracht werden. In Fig. 1 befindet sich der am weitesten rechts angeordnete Napfzug 22 in dieser Übergabeposition.

Die Napfzüge 22 können dabei mittels des Förderbandes 10 taktweise einer nicht näher dargestellten Übergabestation zur Übergabe an die zweite Tiefziehpresse 60 zugeführt werden. Bei für die Übergabe stillstehendem Förderband 10 kann ein Greifer oder ähnliches den Napfzug 22 aus der Übergabeposition entnehmen und der zweiten Tiefziehpresse 60 zuführen, sei dies direkt oder über ein Transfersystem. Aufgrund des geringen durch die Umlenkstäbe 16, 18 in Anspruch genommenen Platzes kann der Greifer die Napfzüge 22 direkt von dem Förderband 10 entnehmen. Nachdem ein Napfzug 22 aus der Übergabeposition entnommen wurde, wird das Förderband 10 von der Steuereinrichtung 32 über die Antriebstrommel 12 wieder beschleunigt und der nächste Napfzug 22 wird in die Übergabeposition gefördert und dort angehalten. Auf diese Weise werden die Napfzüge 22 synchronisiert zu dem Arbeitstakt der zweiten Tiefziehpresse dieser zugeführt.

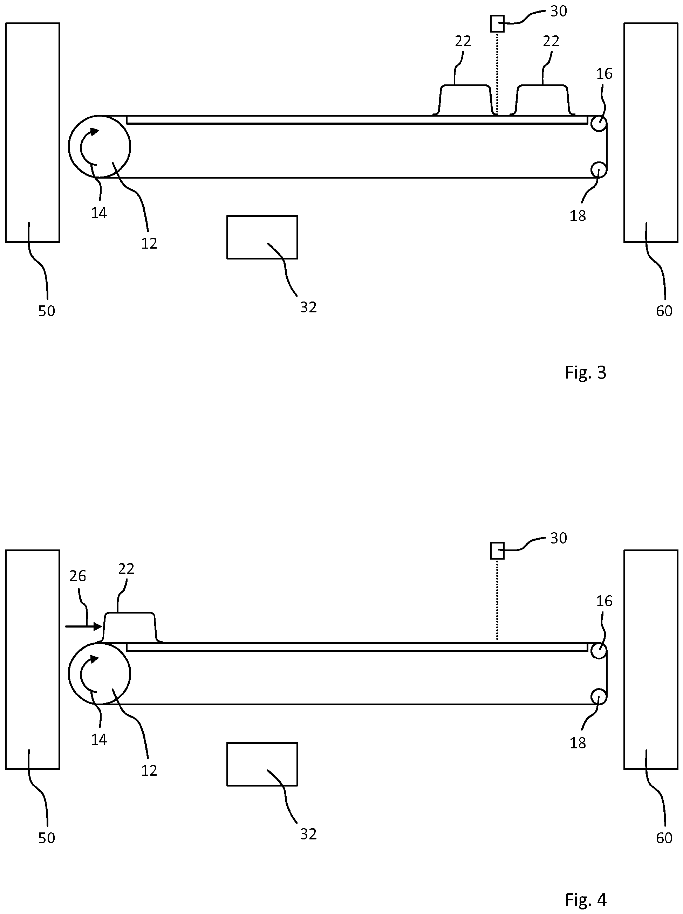

Kommt es zu einem plötzlichen Stopp der zweiten Tiefziehpresse 60, wird auch die erste Tiefziehpresse 50 gestoppt und das Förderband 10 derart angesteuert, dass ein von der ersten Tiefziehpresse 50 vor dem Stopp zuletzt ausgegebener Napfzug 22 in dem der ersten Tiefziehpresse 50 nächsten Freiraum 28 von dem Förderband 10 aufgenommen wird, wie dies in Figur 2 zu erkennen ist. Anschließend wird das Förderband ebenfalls gestoppt. Bei einem Wiederanfahren der zweiten Tiefziehpresse 60 wird auch das Förderband 10 wieder angefahren, wobei das Förderband derart angesteuert wird, dass bei Erreichen der zweiten Tiefziehpresse 60 durch den in dem Freiraum 28 aufgenommenen Napfzug 22 dieser Napfzug 22 der zweiten Tiefziehpresse 60 entsprechend dem normalen Takt der zweiten Tiefziehpresse 60 zugeführt wird. Dadurch wird die durch den in dem Freiraum 28 aufgenommenen Napfzug 22 auf dem Förderband 10 erzeugte Anomalie wieder abgebaut. Um zu verhindern, dass dabei eine erneute Anomalie am Beginn der Förderstrecke des Förderbandes 10 durch von der ersten Tiefziehpresse 50 ausgegebene Napfzüge entsteht, wird die erste Tiefziehpresse 50 erst wieder angefahren, wenn der in dem Freiraum 28 aufgenommene Napfzug 22 der zweiten Tiefziehpresse 60 zugeführt wurde. Dies ist in den Figuren 3 und 4 dargestellt, wobei sich in Figur 3 der in dem Freiraum 28 aufgenommene Napfzug 22 gerade noch auf dem Förderband 10 befindet, und wobei in Figur 4 das gerade erfolgte Wiederanfahren auch der ersten Tiefziehpresse 50 dargestellt ist.

Die in den Figuren gezeigte Vorrichtung kann mehrere identisch ausgestaltete parallel verlaufende Förderbänder besitzen. Die weiteren, zu dem dargestellten Förderband 10 insbesondere parallel angeordneten Förderbänder können insoweit hinsichtlich ihrer Ausgestaltung und Funktion identisch zu dem erläuterten Förderband 10 ausgebildet sein. Das oder die Förderbänder 10 können durch Servoantriebe angetrieben sein. Es versteht sich, dass anstelle der Unterdruckeinrichtung 20 auch andere Fördermittel vorgesehen sein könnten, die die Napfzüge 22 entlang der Förderstrecke fördern.

## Patentansprüche

1. Verfahren zum Transportieren von Produktionserzeugnissen (22) von einer ersten Produktionsmaschine (50) zu einer zweiten Produktionsmaschine (60) mittels einer Fördereinrichtung (10), wobei die erste und zweite Produktionsmaschine (50, 60) taktweise betrieben werden, wobei die in der ersten Produktionsmaschine (50) erzeugten Produktionserzeugnisse (22) der Fördereinrichtung (10) zugeführt werden, wobei die Produktionserzeugnisse (22) von der Fördereinrichtung (10) mitgenommen und entlang der Förderstrecke der Fördereinrichtung (10) auf die Geschwindigkeit der Fördereinrichtung (10) gezwungen werden und die Produktionserzeugnisse (22) mittels der Fördereinrichtung (10) taktweise der zweiten Produktionsmaschine (60) zugeführt werden, wobei die Fördereinrichtung (10) die Produktionserzeugnisse (22) derart beabstandet mitnimmt, dass zwischen benachbarten Produktionserzeugnissen (22) ein Freiraum (28) zur Aufnahme mindestens eines weiteren Produktionserzeugnisses (22) besteht,
- wobei bei einem Stopp der zweiten Produktionsmaschine (60) auch die erste Produktionsmaschine (50) gestoppt wird und die Fördereinrichtung (10) derart angesteuert wird, dass ein von der ersten Produktionsmaschine (50) vor dem Stopp zuletzt ausgegebenes Produktionserzeugnis (22) in dem der ersten Produktionsmaschine (50) nächsten Freiraum (28) von der Fördereinrichtung (10) aufgenommen wird und die Fördereinrichtung (10) anschließend ebenfalls gestoppt wird.

2. Verfahren nach Anspruch 1, **dadurch gekennzeichnet, dass** die erste Produktionsmaschine (50) eine erste Tiefziehpresse (50) und die zweite Produktionsmaschine (60) eine zweite Tiefziehpresse (60) ist, und dass die Produktionserzeugnisse (22) Napfzüge (22) sind.

3. Verfahren nach einem der vorhergehenden Ansprüche, **dadurch gekennzeichnet, dass** die Fördereinrichtung (10) ein Förderband (10) ist.

4. Verfahren nach einem der vorhergehenden Ansprüche, **dadurch gekennzeichnet, dass** bei einem Wiederanfahren der zweiten Produktionsmaschine (50) auch die Fördereinrichtung (10) wieder angefahren wird, wobei die Fördereinrichtung (10) derart angesteuert wird, dass bei Erreichen der zweiten Produktionsmaschine (60) durch das in dem Freiraum (28) aufgenommene Produktionserzeugnis (22) dieses Produktionserzeugnis (22) der zweiten Produktionsmaschine (60) entsprechend dem Takt der zweiten Produktionsmaschine (60) zugeführt wird.

5. Verfahren nach Anspruch 4, **dadurch gekennzeichnet, dass** die erste Produktionsmaschine (50) erst wieder angefahren wird, wenn das in dem Freiraum (28) aufgenommene Produktionserzeugnis (22) von der Fördereinrichtung (10) der zweiten Produktionsmaschine (60) zugeführt wurde.

6. Verfahren nach einem der Ansprüche 1 bis 5, **dadurch gekennzeichnet, dass** die Fördereinrichtung (10) während eines Arbeitstakts der ersten und zweiten Produktionsmaschine (50, 60) jeweils mindestens zwei Förderschritte ausführt.

7. Verfahren nach einem der Ansprüche 1 bis 5, **dadurch gekennzeichnet, dass** die Fördereinrichtung (10) während eines Arbeitstakts der ersten und zweiten Produktionsmaschine (50, 60) jeweils einen Förderschritt ausführt.

8. Verfahren nach einem der vorhergehenden Ansprüche, **dadurch gekennzeichnet, dass** die Produktionserzeugnisse (22) durch die Fördereinrichtung (10) einer Übergabestation zur Übergabe an die zweite Produktionsmaschine (60) zugeführt werden.

9. Verfahren nach einem der vorhergehenden Ansprüche, **dadurch gekennzeichnet, dass** an zumindest einem Ort entlang der Förderstrecke der Fördereinrichtung (10) jeweils die Position der Produktionserzeugnisse (22) detektiert wird.

10. Verfahren nach Anspruch 9, **dadurch gekennzeichnet, dass** die Geschwindigkeit der Fördereinrichtung (10) abhängig von der jeweils detektierten Position der Produktionserzeugnisse (22) jeweils so angepasst wird, dass die Produktionserzeugnisse (22) der zweiten Produktionsmaschine (60) synchron mit dem Arbeitstakt der zweiten Produktionsmaschine (60) zugeführt werden.

## Claims

1. A method for transporting manufactured products (22) from a first production machine (50) to a second production machine (60) by means of a conveying apparatus (10), wherein the first and second production machines (50, 60) are operated in a cycled manner, wherein the manufactured products (22) produced in the first production machine (50) are fed to the conveying apparatus (10), wherein the manufactured products (22) are entrained by the conveying apparatus (10) and are forced to travel at the speed of the conveying apparatus (10) along the conveying route of the conveying apparatus (10), and the manufactured products (22) are fed to the second production machine (60) by means of the conveying apparatus (10) in a cycled manner, wherein the conveying apparatus (10) entrains the manufactured products (22) at a distance from one another such that a free space (28) for receiving at least one other manufactured product (22) is left between neighboring manufactured products (22),
wherein
in the event of a stop of the second production machine (60), the first production machine (50) is also stopped and the conveying apparatus (10) is actuated such that a manufactured product (22) last output by the first production machine (50) prior to the stop is received by the conveying apparatus (10) in the free space (28) nearest to the first production machine (50), and the conveying apparatus (10) is then also stopped.

2. The method according to claim 1, **characterized in that** the first production machine (50) is a first cupping press (50) and the second production machine (60) is a second cupping press (60), and **in that** the manufactured products (22) are cups (22).

3. The method according to one of the preceding claims, **characterized in that** the conveying apparatus (10) is a conveyor belt (10).

4. The method according to one of the preceding claims, **characterized in that**, when the second production machine (50) starts up again, the conveying apparatus (10) is also started up again, the conveying apparatus (10) being actuated such that when the manufactured product (22) received in the free space (28) reaches the second production machine (60), said manufactured product (22) is fed to the second production machine (60) in accordance with the cycle of the second production machine (60).

5. The method according to claim 4, **characterized in that** the first production machine (50) is only started up again if the manufactured product (22) received in the free space (28) has been fed to the second production machine (60) by the conveying apparatus (10).

6. The method according to one of claims 1 to 5, **characterized in that** the conveying apparatus (10) carries out at least two conveying steps during each work cycle of the first and second production machines (50, 60).

7. The method according to one of claims 1 to 5, **characterized in that** the conveying apparatus (10) carries out one conveying step during each work cycle of the first and second production machines (50, 60).

8. The method according to one of the preceding claims, **characterized in that** the manufactured products (22) are fed by means of the conveying apparatus (10) to a pass-on station in order to be passed on to the second production machine (60).

9. The method according to one of the preceding claims, **characterized in that** the position of the manufactured products (22) is detected in each case at at least one location along the conveying route of the conveying apparatus (10).

10. The method according to claim 9, **characterized in that** the speed of the conveying apparatus (10) is adjusted in each case depending on the relevant detected position of the manufactured products (22) such that the manufactured products (22) are fed to the second production machine (60) synchronously with the work cycle of the second production machine (60).

## Revendications

1. Procédé de transport de produits manufacturés (22) d'une première machine de production (50) à une deuxième machine de production (60) au moyen d'un convoyeur (10), dans lequel les première et deuxième machines de production (50, 60) sont commandées en cadence, dans lequel les produits manufacturés (22) produits par la première machine de production (50) sont fournis au convoyeur (10), dans lequel les produits manufacturés (22) sont saisis sur le convoyeur (10) et poussés le long de la ligne de transport du convoyeur (10) à la vitesse du convoyeur (10) et les produits manufacturés (22) sont fournis en cadence par le convoyeur (10) à la deuxième machine de production (60), dans lequel
le convoyeur (10) saisit les produits manufacturés (22) avec un espacement tel qu'un espace libre (28) existe entre les produits manufacturés adjacents (22) pour saisir au moins un autre produit manufacturé (22), dans lequel
la première machine de production (50) est également arrêtée lors d'un arrêt de la deuxième machine de production (60) et le convoyeur (10) est commandé de telle sorte qu'un produit manufacturé (22) distribué en dernier lieu par la première machine de production (50) avant l'arrêt est saisi sur le convoyeur (10) dans l'espace libre (28) suivant directement la première machine de production (50), et le convoyeur (10) est ensuite arrêté également.

2. Procédé selon la revendication 1, **caractérisé en ce que** la première machine de production (50) est une première presse à emboutir (50) et la deuxième machine de production (60) est une deuxième presse à emboutir (60), et **en ce que** les produits manufacturés (22) sont des coupelles embouties (22).

3. Procédé selon l'une des revendications précédentes, **caractérisé en ce que** le convoyeur (10) est une bande transporteuse (10).

4. Procédé selon l'une des revendications précédentes, **caractérisé en ce que** lors d'un redémarrage de la deuxième machine de production (50), le convoyeur (10) est aussi redémarré, dans lequel le convoyeur (10) est commandé de telle sorte que lorsque le produit manufacturé (22) saisi dans l'espace libre (28) atteint la deuxième machine de production (60), ce produit manufacturé (22) est fourni à la deuxième machine de production (60) conformément à la cadence de la deuxième machine de production (60).

5. Procédé selon la revendication 4, **caractérisé en ce que** la première machine de production (50) est redémarrée d'abord quand le produit manufacturé (22) reçu dans l'espace libre (28) est fourni par le convoyeur (10) à la deuxième machine de production (60).

6. Procédé selon l'une des revendications 1 à 5, **caractérisé en ce que** le convoyeur (10) exécute au moins deux étapes d'avancement durant un cycle de travail des première et deuxième machines de production (50, 60).

7. Procédé selon l'une des revendications 1 à 5, **caractérisé en ce que** le convoyeur (10) exécute une étape d'avancement durant un cycle de travail des première et deuxième machines de production (50, 60).

8. Procédé selon l'une des revendications précédentes, **caractérisé en ce que** les produits manufacturés (22) sont fournis par le convoyeur (10) à une station de transfert pour un transfert à la deuxième machine de production (60).

9. Procédé selon l'une des revendications précédentes, **caractérisé en ce que** la position des produits manufacturés (22) est détectée à au moins un emplacement le long de la ligne de transport du convoyeur (10).

10. Procédé selon la revendication 9, **caractérisé en ce que** la vitesse du convoyeur (10) en fonction de la position respective détectée des produits manufacturés (22) est adaptée de telle sorte que les produits manufacturés (22) sont fournis à la deuxième machine de production (60) de manière synchrone à la cadence de la deuxième machine de production (60).
